# EUROPEAN PATENT APPLICATION

(11) **EP 4 742 343 A1**
(43) Date of publication of application: **13.05.2026**
(21) Application number: 25207105.5
(22) Date of filing: 07.10.2025
(51) Int. Cl.: H01M 10/04, H01M 50/107, H01M 50/152, H01M 50/186

(54) **ELECTRODE ASSEMBLY AND SECONDARY BATTERY INCLUDING ELECTRODE ASSEMBLY**

(30) Priority: 06.11.2024 KR 20240156323
(71) Applicant: SAMSUNG SDI CO., LTD., Yongin-si, Gyeonggi-do 17084 (KR)
(72) Inventor: CHO, Sungmin, Yongin-si, Gyeonggi-do 17084 (KR)
(74) Representative: Gulde & Partner

(57) **Abstract**

An electrode assembly according to the present disclosure includes a first electrode connected to a first electrode tab, a second electrode connected to a second electrode tab, and a separator that is positioned between the first electrode and the second electrode. The first electrode, the separator and the second electrode are sequentially stacked and wound around a winding axis such that the electrode assembly includes a core portion having a center hole formed therein and an outer portion connected to the core portion. A length of the core portion in a direction of the winding axis is different from a length of the outer portion in the direction of the winding axis.

## Description

### BACKGROUND

### FIELD

This disclosure relates to an electrode assembly and a secondary battery including the electrode assembly.

### Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

In secondary batteries, energy density is the amount of energy that may be stored per unit volume. High energy density secondary batteries provide increased operating time in portable devices and increased driving range in electric vehicles. Accordingly, the energy density of secondary batteries is recognized as one of the important factors determining the performance of secondary batteries, and various efforts have been made to improve the energy density of secondary batteries.

The above information disclosed in this Background section is for enhancement of understanding of the background of the present disclosure, and therefore, it may contain information that does not constitute related (or prior) art.

### SUMMARY

Various aspects of the present disclosure relate to an electrode assembly and a secondary battery including the electrode assembly.

These and other aspects and features of the present disclosure will be described in or will be apparent from the following description of embodiments of the present disclosure.

According to various aspects of the disclosure, there is provided an electrode assembly including: a first electrode connected to a first electrode tab; a second electrode connected to a second electrode tab; and a separator that is positioned between the first electrode and the second electrode, in which the first electrode, the separator, and the second electrode are sequentially stacked and wound around a winding axis such that the electrode assembly includes a core portion having a center hole formed therein and an outer portion connected to the core portion, and a length of the core portion in a direction of the winding axis is different from a length of the outer portion in the direction of the winding axis.

According to various aspects, the outer portion may include a first outer portion connected to the core portion, and a second outer portion connected to the first outer portion, a length of the first outer portion in the direction of the winding axis may be shorter than the length of the core portion in the direction of the winding axis, and a length of the second outer portion in the winding axis direction may be longer than the length of the first outer portion in the direction of the winding axis.

According to various aspects, the first electrode tab and the second electrode tab may protrude from the first outer portion.

According to various aspects, the electrode assembly may include a first outer surface formed by the core portion, a second outer surface formed by the first outer portion, and a third outer surface formed by the second outer portion.

According to various aspects, a top of the core portion, a top of the first outer portion, and a top of the second outer portion may extend along lines or planes that are parallel to each other, the first outer surface may be perpendicular to the top of the core portion and the top of the first outer portion, and the second outer surface may be perpendicular to the top of the first outer portion and the top of the second outer portion.

According to various aspects, a top of the core portion, a top of the first outer portion, and a top of the second outer portion may extend along lines or planes that are parallel to each other, and the first outer surface and the second outer surface may be inclined radially outward from the core portion and the first outer portion, respectively.

According to various aspects of the disclosure, there is provided a secondary battery including: an electrode assembly; a cylindrical case accommodating the electrode assembly; a cap plate sealing an opening of the cylindrical case; and a gasket interposed between the cap plate and the cylindrical case, in which the electrode assembly includes a first electrode connected to a first electrode tab; a second electrode connected to a second electrode tab; and a separator that is interposed between the first electrode and the second electrode, wherein the first electrode, the separator and the second electrode are sequentially stacked and wound around a winding axis to form the electrode assembly, with the electrode assembly including a core portion having a center hole formed therein and an outer portion connected to the core portion, and a length of the core portion in a direction of the winding axis is longer than a length of the outer portion in the direction of the winding axis.

According to various aspects, the cap plate may include a first flat portion positioned at a center and protruding in a direction away from the electrode assembly accommodated in the case, a second flat portion positioned outside the first flat portion, and a connection portion positioned between the first flat portion and the second flat portion.

According to various aspects, the connection portion may be inclined radially outward from the first flat portion.

According to various aspects, a notch may be formed in a lower surface of the second flat portion.

According to various aspects, the outer portion may include a first outer portion connected to the core portion, and a second outer portion connected to the first outer portion, a length of the first outer portion in the direction of the winding axis may be shorter than the length of the core portion in the direction of the winding axis, and a length of the second outer portion in the direction may be shorter than the length of the first outer portion in the direction of the winding axis.

According to various aspects, the first electrode tab may protrude from the first outer portion and be connected to the second flat portion of the cap plate.

According to various aspects, the second electrode tab may protrude from the first outer portion and be connected to a bottom portion of the case.

According to various aspects, an insulating member between the cap plate and the electrode assembly may be further provided.

According to various aspects, the electrode assembly may include a first outer surface formed by the core portion, a second outer surface formed by the first outer portion, and a third outer surface formed by the second outer portion.

According to various aspects, a top of the core portion, a top of the first outer portion, and a top of the second outer portion may extend along lines or planes that are parallel to each other, the first outer surface may be perpendicular to the top of the core portion and the top of the first outer portion, and the second outer surface may be perpendicular to the top of the first outer portion and the top of the second outer portion.

According to various aspects, the top of the core portion, the top of the first outer portion, and the top of the second outer portion may extend along lines or planes that are parallel to each other, and the first outer surface and the second outer surface may be inclined radially outward form the core portion and the first outer portion, respectively.

According to various aspects, the top of the core portion may be higher than a bottom of the second flat portion of the cap plate in the direction of the winding axis.

According to various aspects, the top of the second outer portion may be higher than a bottom of the gasket in the direction of the winding axis.

According to various aspects, a longest diameter of the first outer portion may be shorter than a diameter of a circle formed by an inner surface of the gasket.

According to various aspects of the present disclosure, an electrode assembly and a secondary battery having improved energy density may be provided.

According to various aspects of the present disclosure, the energy density of a secondary battery may be improved by configuring the shape of the electrode assembly and positioning the electrode assembly in the unused space inside the case.

According to various aspects of the present disclosure, solely a cap plate is provided as a component for sealing the upper portion of a cylindrical case, and components having a current blocking function are not provided, thereby providing more space in which an electrode assembly may be accommodated, and thereby improving the energy density of a secondary battery.

According to various aspects of the present disclosure, when the shape of the cap plate and the gasket is changed, the shape of the electrode assembly is correspondingly changed, and the electrode assembly is positioned in open space inside the case, thereby improving the energy density of the secondary battery.

However, aspects and features of the present disclosure are not limited to those described above, and other aspects and features not mentioned will be clearly understood by a person skilled in the art from the detailed description.

### BRIEF DESCRIPTION OF DRAWINGS

The drawings illustrate embodiments of the present disclosure and further describe aspects and features of the present disclosure together with the detailed description of the present disclosure. The present disclosure should not be construed as being limited to the drawings.
Fig. 1 is a perspective view showing an example of a secondary battery according to various aspects of the present disclosure.
Fig. 2 is a cross-sectional view showing an example of the secondary battery according to various aspects of the present disclosure.
Fig. 3 is a drawing showing an example of an electrode assembly before and after winding according to various aspects of the present disclosure.
Fig. 4 is a cross-sectional view showing an example of the electrode assembly according to various aspects of the present disclosure.
Fig. 5 shows an example of an electrode assembly before and after winding according to various aspects of the present disclosure.
Fig. 6 is a cross-sectional view of an electrode assembly according to various aspects of the present disclosure.
Fig. 7 is a perspective view showing an example of an insulating member according to various aspects of the present disclosure.
Fig. 8 is a perspective view showing an example of an insulating member according to various aspects of the present disclosure.
Fig. 9 is a perspective view showing an example of a cap plate according to various aspects of the present disclosure.
Fig. 10 is a cross-sectional view of the cap plate according to various aspects of the present disclosure.
Fig. 11 is a cross-sectional view of the upper portion of a secondary battery according to various aspects of the present disclosure.
Fig. 12 is a cross-sectional view of the upper portion of a secondary battery according to various aspects of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In this disclosure, the sizes and relative sizes of layers and regions shown in the drawings may be exaggerated for clarity of explanation. That is, the sizes shown in the drawings are only for convenience of understanding and are not limited thereto. In addition, identical reference numerals throughout the specification refer to identical components.

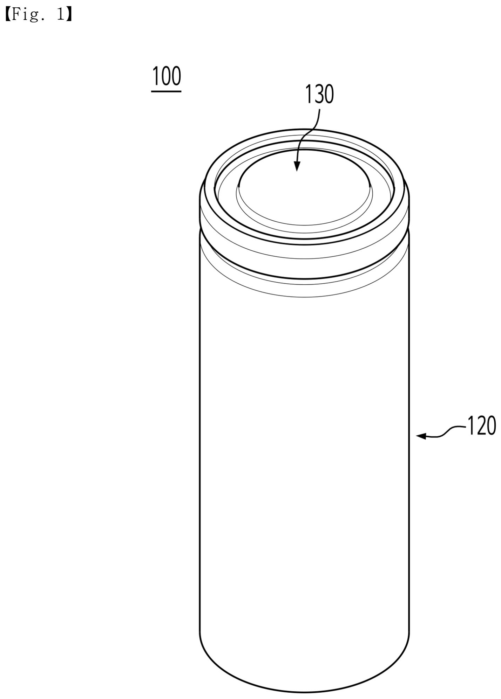

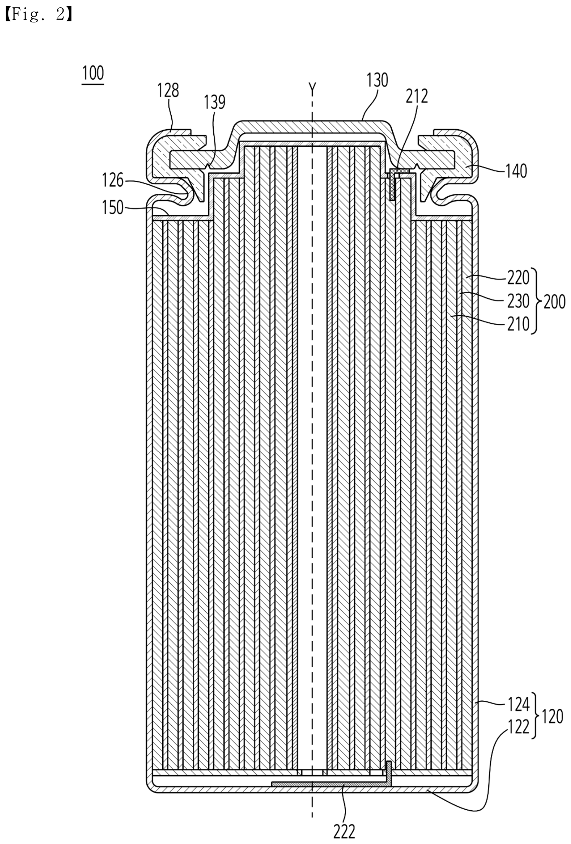

Fig. 1 is a perspective view showing an example of a secondary battery according to various aspects of the present disclosure, and Fig. 2 is a cross-sectional view showing an example of the secondary battery according to various aspects of the present disclosure.

As illustrated in Figs. 1 and 2, the secondary battery 100 may include an electrode assembly 200, a cylindrical case 120 that accommodates the electrode assembly 200 and an electrolyte therein, a cap plate 130 that is coupled to an opening of the cylindrical case 120 to seal the cylindrical case 120. An insulating member 150 may be positioned between the electrode assembly 200 and the cap plate 130 within the cylindrical case 120.

The electrode assembly 200 may include a first electrode 210, a second electrode 220, and a separator 230 positioned between first and second electrodes 210 and 220. The electrode assembly 200 may be wound in a jelly-roll shape about a winding axis Y. In another example, the electrode assembly 200 may be formed by stacking a plurality of electrode plates and a separator that is folded in a zigzag shape and interposed between the electrode plates along the thickness direction.

According to various aspects, the electrode assembly 200 may include a first electrode 210 connected to a first electrode tab 212, a second electrode 220 connected to a second electrode tab 222, and a separator 230 interposed between the first electrode 210 and the second electrode 220. The first electrode 210, the separator 230, and the second electrode 220 may be sequentially stacked and wound. In a wound state, the electrode assembly 200 may include a core portion having a center hole formed therein and an outer portion connected to the core portion. Here, the length of the core portion in the winding axis Y direction may be greater than the length of the outer portion in the winding axis Y direction. This will be described in more detail below.

The first electrode 210 includes a first substrate and a first active material layer on the first substrate. A first electrode tab 212 may extend outwardly from a first uncoated portion of the first substrate at where the first active material layer is not located, and the first electrode tab 212 may be electrically connected to the cap assembly 130.

The second electrode 220 includes a second substrate and a second active material layer on the second substrate. A second electrode tab 222 may extend outwardly from a second uncoated portion of the second substrate at where the second active material layer is not located, and the second electrode tab 222 may be electrically connected to the case 120. The first electrode tab 212 and the second electrode tab 222 may extend in opposite directions.

The first electrode 210 may act as a positive electrode. In such various aspects, the first substrate may be made of, for example, an aluminum foil, and the first active material layer may include, for example, a transition metal oxide. The second electrode 220 may act as a negative electrode. In such various aspects, the second substrate may be made of, for example, a copper foil or a nickel foil, and the second active material layer may include graphite, for example.

The separator 230 prevents a short circuit between the first electrode 210 and the second electrode 220 while allowing movement of lithium ions therebetween. The separator 230 may be made of, for example, a polyethylene film, a polypropylene film, a polyethylene-polypropylene film, or the like.

The case 120 accommodates the electrode assembly 200 and, together with the cap plate 130, forms the external appearance of the secondary battery 100. The case 120 may have a substantially cylindrical body portion 124 and a bottom portion 122 connected to one side (e.g., to one end) of the body portion 124. A beading part (e.g., a bead) 126 deformed inwardly may be formed in the body portion 124, and a crimping part (e.g., a crimp) 128 bent inwardly may be formed at an open end of the body portion 124.

The beading part 126 can reduce or prevent movement of the electrode assembly 200 inside the case 120 and can facilitate seating of the gasket 140 and the cap plate 130. The crimping part 128 may firmly fix the cap plate 130 by pressing the edge of the cap plate 130. The case 120 may be formed of iron plated with nickel, for example. The case 120 may be made of steel, steel alloy, aluminum or aluminum alloy.

The cap plate 130 can seal the opening of the cylindrical case 120 to protect the electrode assembly 200 from the external environment. The cap plate 130 may include a notch 139. When the internal pressure of the cylindrical case 120 becomes higher than the reference pressure, the cap plate 130 may break at the notch 139 to thereby releasing the internal gas of the cylindrical case 120 to outside of the secondary battery 100.

A center of the cap plate 130 may protrude in a direction away from the electrode assembly 200. As such, the cap plate 130 may function as a positive terminal. The cap plate 130 may be made of aluminum or an aluminum alloy.

According to various aspects, the cap plate 130 may include a first flat portion positioned at the center and protruding in a direction away from the electrode assembly 200 accommodated in the cylindrical case 120 is positioned, a second flat portion positioned outside the first flat portion, and a connection portion positioned between the first flat portion and the second flat portion. This configuration will be described in more detail later below.

The gasket 140 may insulate between the cap plate 130 and the case 120. The gasket 140 may be formed of a resin material such as polyethylene (PE), polypropylene (PP), polyethylene terephthalate (PET), etc.

The insulating member 150 may be positioned to be in contact with the electrode assembly 200 below the beading part 126. The insulating member 150 may have a tab opening through which the first electrode tab 212 is drawn out. The cap plate 130, which is electrically connected to the first electrode 210 by the first electrode tab 212, may face the electrode assembly 200 with an insulating member 150 interposed therebetween and may maintain a state of being insulated (e.g., electrically insulated) from the electrode assembly 200 by the insulating member 150.

An electrolyte is provided inside of the cylindrical case 120, The electrolyte allows lithium ions generated by electrochemical reaction in the negative and positive plates inside the battery to move during charging/discharging. The electrolyte may be a non-aqueous organic electrolyte that is a mixture of a lithium salt and a high-purity organic solvent. In other cases, the electrolyte may be a polymer using a polymer electrolyte or a solid electrolyte. But the type of electrolyte is not limited in the present disclosure.

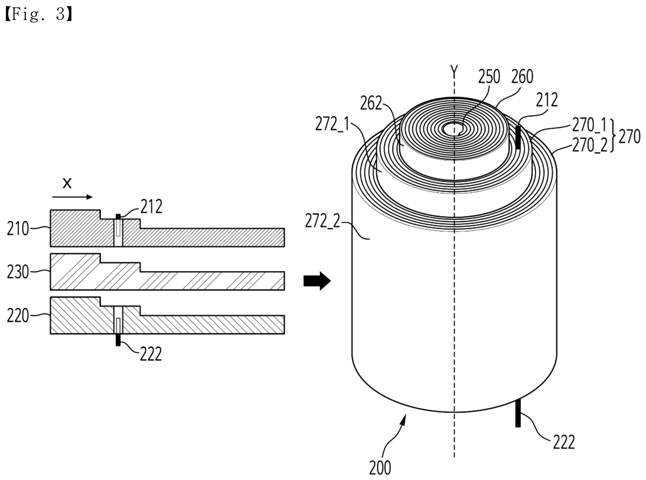

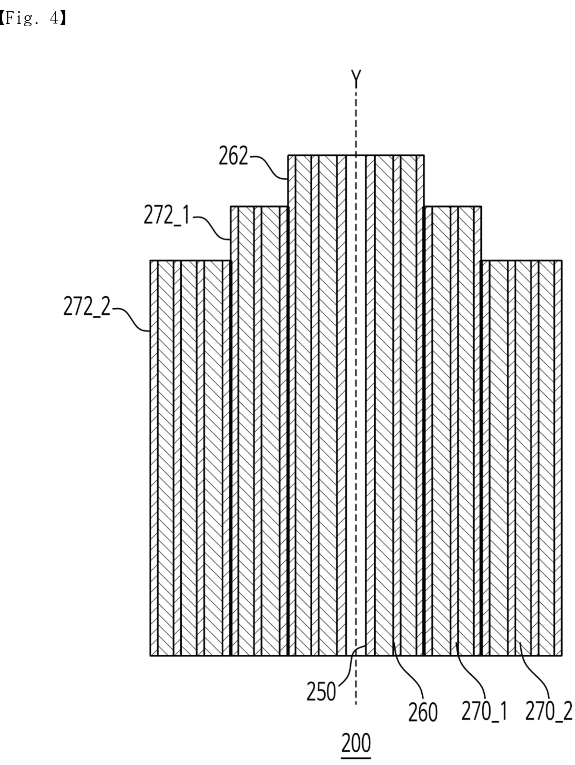

Fig. 3 shows an example of an electrode assembly before and after winding according to various aspects of the present disclosure, and Fig. 4 is a cross-sectional view of the electrode assembly according to various aspects of the present disclosure.

The left part of Fig. 3 is a plan view showing the shape of the secondary battery before the electrode assembly is wound, and the right part of Fig. 3 is a perspective view showing the shape of the secondary battery after the electrode assembly is wound.

Referring to Fig. 3, the electrode assembly 200 may include a first electrode 210, a second electrode 220, and a separator 230. Specifically, the electrode assembly 200 may be formed by winding the first electrode 210, the second electrode 220, and a separator 230 interposed between the first electrode 210 and the second electrode 220. The electrode assembly 200 may be wound to form a core portion 260, and the core portion 260 may include a center hole 250. The electrode assembly 200 may include a first electrode tab 212 connected to the first electrode 210 and a second electrode tab 222 connected to the second electrode 220.

The first electrode 210 may include a first substrate, a first non-coated portion formed on the first substrate, and a first electrode tab 212 connected to a surface of the first non-coated portion. The first electrode 210 may also include a first active material layer to which a first active material is applied. A first electrode tab 212 may extend outward from a first non-coated portion of the first substrate where an active material layer is not applied, and the first electrode tab 212 may be electrically connected to a cap plate 130 (see Fig. 2).

The second electrode 220 may include a second substrate, a second non-coated portion formed on the second substrate, and a second electrode tab 222 connected to a surface of the second non-coated portion. The second electrode 220 may also include a second active material layer to which a second active material is applied. A second electrode tab 222 may extend outward from a second non-coated portion of the second substrate to which the second active material layer is not applied, and the second electrode tab 222 may be electrically connected to a case 120 (see Fig. 2).

The electrode assembly 200 may be wound from left to right (X direction) as shown in the drawing direction of Fig. 3. Hereinafter, the X direction is referred to as the winding direction, and based on the drawing direction of Fig. 3, the left end of the first electrode 210 and the second electrode 220 means the winding tip, and the right end means the winding end.

Here, the winding tip refers to a region where winding begins during the winding process of the electrode assembly 200, and the winding end refers to a region where winding ends during the winding process of the electrode assembly 200. Accordingly, the positions at which the first electrode tab 212 and the second electrode tab 222 protrude from the wound electrode assembly 200 may be set according to the positions at which the first electrode tab 212 and the second electrode tab 222 are connected to the first electrode 210 and the second electrode 220. For example, the first electrode tab 212 of the winding end may be located on the outer periphery of the wound electrode assembly 200. That is, the winding end may be located at the outermost part of the electrode assembly 200. As another example, the first electrode tab 212 of the winding tip may be positioned on the inner periphery of the wound electrode assembly 200. That is, the winding tip may be located at the innermost part of the electrode assembly 200.

The first electrode 210 may function as a positive electrode. In this case, the first substrate may be made of, for example, aluminum foil, and the first active material may include, for example, a transition metal oxide.

A positive electrode for a rechargeable lithium battery may include a current collector and a positive electrode active material layer on the current collector. The positive electrode active material layer may include a positive electrode active material and may further include a binder and/or a conductive material (e.g., an electrically conductive material).

For example, the positive electrode may further include an additive that can serve as a sacrificial positive electrode.

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The binder serves to attach the positive electrode active material particles to each other and also to attach the positive electrode active material to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart conductivity (e.g., electrical conductivity) to the electrode. Any material that does not cause chemical change (e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder or a metal fiber; a conductive polymer such as a polyphenylene derivative; or a mixture thereof.

Al may be used as the current collector, but the present disclosure is not limited thereto.

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. LiaA1-bXbO2-cDc (0.90≤a≤1.8, 0≤b≤0.5, and 0≤c≤0.05); LiaMn2-bXbO4-cDc (0.90≤a≤1.8, 0≤b≤0.5, and 0≤c≤0.05); LiaNi1-b-cCobXcO2-αDα (0.90≤a≤1.8, 0≤b≤0.5, 0≤c≤0.5, and 0<α<2); LiaNi1-b-cMnbXcO2-αDα (0.90≤a≤1.8, 0≤b≤0.5, 0≤c≤0.5, and 0<α<2); LiaNibCocL1dGeO2 (0.90≤a≤1.8, 0≤b≤0.9, 0≤c≤0.5, 0≤d≤0.5, and 0≤e≤0.1); LiaNiGbO2 (0.90≤a≤1.8 and 0.001≤b≤0.1); LiaCoGbO2 (0.90≤a≤1.8 and 0.001≤b≤0.1); LiaMn1-bGbO2 (0.90≤a≤1.8 and 0.001≤b≤0.1); LiaMn2GbO4 (0.90≤a≤1.8 and 0.001≤b≤0.1); LiaMn1-gGgPO4 (0.90≤a≤1.8 and 0≤g≤0.5); Li(3-f)Fe2(PO4)3 (0≤f≤2); or LiaFePO4 (0.90≤a≤1.8).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L1 is Mn, Al, or a combination thereof.

The positive electrode active material may be, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

The second electrode 220 may function as a negative electrode. In this case, the second substrate may be formed of, for example, copper foil or nickel foil, and the second active material may include, for example, graphite.

The negative electrode for a rechargeable lithium battery may include a current collector and a negative electrode active material layer on the current collector. The negative electrode active material layer may include a negative electrode active material, and may further include a binder and/or a conductive material (e.g., an electrically conductive material).

For example, the negative electrode active material layer may include about 90 wt% to about 99 wt% of the negative electrode active material, about 0.5 wt% to about 5 wt% of the binder, and about 0 wt% to about 5 wt% of the conductive material.

The negative current collector may include a copper foil, a nickel foil, a stainless steel foil, a titanium foil, a nickel foam, a copper foam, a polymer substrate coated with a conductive metal, or a combination thereof.

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOx (0 < x < 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, SnO2, a Sn-based alloy, or a combination thereof.

The silicon-carbon composite may be a composite of silicon and amorphous carbon. According to various aspects, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

The separator 230 may function to prevent short circuiting between the first electrode 210 and the second electrode 220 while allowing movement of lithium ions. The separator 230 may be formed of, for example, a polyethylene film, a polypropylene film, a polyethylene-polypropylene film, or the like, but is not limited thereto.

The separator 230 may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 230 may include a porous substrate and a coating layer including an organic material, an inorganic material, or a combination thereof on one or both surfaces of the porous substrate.

The porous substrate may be a polymer film formed of any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON^{®}, and polytetrafluoroethylene, or a copolymer or mixture of two or more thereof.

The organic material may include a polyvinylidene fluoride-based polymer or a (meth)acrylic polymer.

The inorganic material may include inorganic particles selected from Al2O3, SiO2, TiO2, SnO2, CeO2, MgO, NiO, CaO, GaO, ZnO, ZrO2, Y2O3, SrTiO3, BaTiO3, Mg(OH)2, boehmite, and a combination thereof, but is not limited thereto.

The organic material and the inorganic material may be mixed in one coating layer, or a coating layer including an organic material and a coating layer including an inorganic material may be stacked.

According to various aspects, the first electrode 210, the separator 230, and the second electrode 220 may be sequentially stacked and wound to form an electrode assembly 200. Therefore, the shapes of the first electrode 210, the separator 230, and the second electrode 220 may determine the shape of the wound electrode assembly 200. As illustrated in Fig. 3, the first electrode 210, the separator 230, and the second electrode 220 may include steps such that heights (i.e., lengths in the Y direction) of the electrodes 210 and 202 and separator 230 decrease along the winding direction X direction. Accordingly, the winding tip may be positioned at the innermost part of the wound electrode assembly 200 by protruding in the winding axis Y direction, and the winding end may be positioned at the outermost part of the wound electrode assembly 200.

The first electrode 210, the separator 230, and the second electrode 220 may be sequentially stacked and wound. In the wound state, the electrode assembly 200 may include a core portion 260 having a center hole 250 formed therein and an outer portion 270 connected to the core portion 260. A length of the core portion 260 in a winding axis Y direction is different from a length of the outer portion 270 in the winding axis Y direction. As illustrated in Fig. 3, the outer portion 270 includes a first outer portion 270_1 connected to the core portion 260 and a second outer portion 270_2 connected to the first outer portion 270_1. The length of the first outer portion 270_1 in the winding axis Y direction may be less than the length of the core portion 260 in the winding axis Y direction, and the length of the second outer portion 270_2 in the winding axis Y direction may be less than the length of the first outer portion 270_1 in the winding axis Y direction.

According to various aspects, the first electrode tab 212 and the second electrode tab 222 may be positioned between the winding tip and the winding end of the first electrode 210 and the second electrode 220. Accordingly, the first electrode tab 212 and the second electrode tab 222 may protrude from the first outer portion 270_1 of the electrode assembly 200. However, the present disclosure is not limited to this configuration.

According to various aspects, the electrode assembly 200 may include a first outer surface 262 formed by the core portion 260, a second outer surface 272_1 formed by the first outer portion 270_1, and a third outer surface 272_2 formed by the second outer portion 270_2. As illustrated in Fig. 4, the top of the core portion 260, the top of the first outer portion 270_1, and the top of the second outer portion 270_2 are parallel to each other, the first outer surface 262 is perpendicular to the top of the core portion 260 and the top of the first outer portion 270_1, and the second outer surface 272_1 may be perpendicular to the top of the first outer portion 270_1 and the top of the second outer portion 270_2.

With the electrode assembly 200 described above, the shape of the electrode assembly 200 may such that the electrode assembly 200 fills what would otherwise be empty space inside the case. The, the amount of electrode assembly 200 accommodated inside the case increases for a given secondary battery, thereby improving the energy density of the secondary battery.

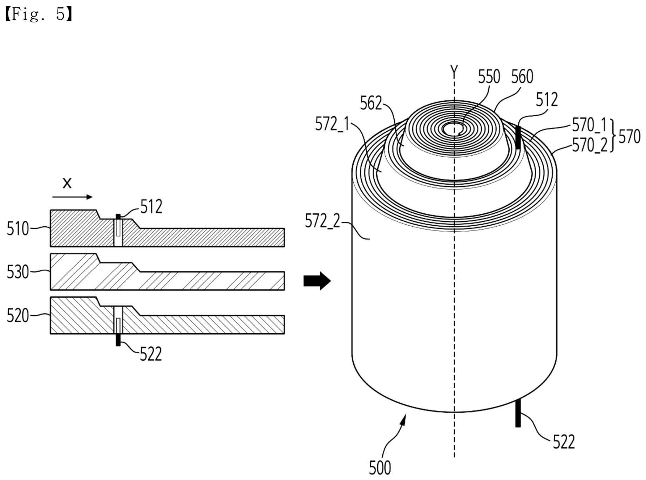

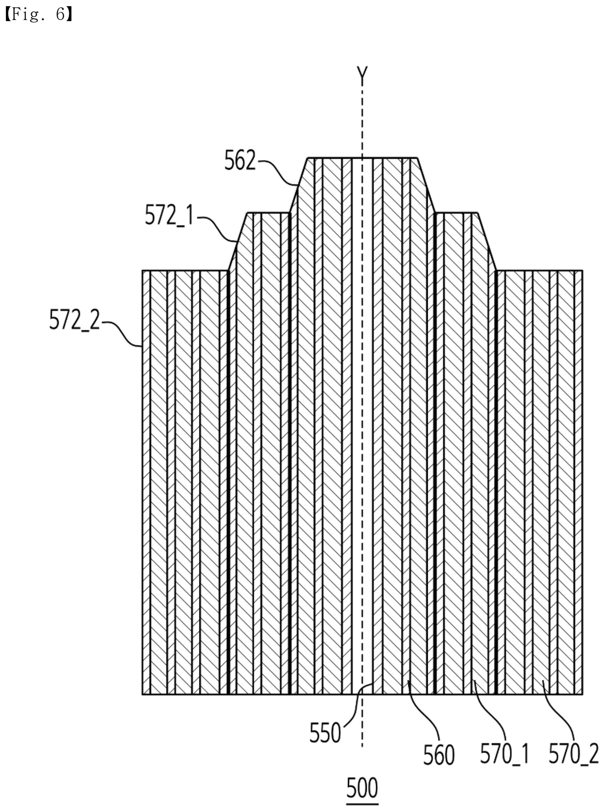

Fig. 5 is an example of an electrode assembly before and after winding according to various aspects of the present disclosure, and Fig. 6 is a cross-sectional view showing an example of the electrode assembly according to various aspects of the present disclosure. The differences between the configurations shown in Figs. 5 and 6 as compared to the configurations shown in Figs 3 and 4 will be described.

Referring to Figs. 5 and 6, the first electrode 510, the separator 530, and the second electrode 520 may include regions where the height gradually decreases in the winding axis direction (Y direction). The winding tip may be positioned at the innermost part of the wound electrode assembly 500 by protruding in the winding axis Y direction, and the winding end may be positioned at the outermost part of the wound electrode assembly 500.

According to various aspects, the top of the core portion 560, the top of the first outer portion 570_1, and the top of the second outer portion 570_2 are parallel to each other, and the first outer surface 562 and the second outer surface 572_1 are inclined in a radially outward direction. With such a shape the electrode assembly 500 can be positioned in what would otherwise be unused space inside the case, the energy density of the secondary battery is thereby improved.

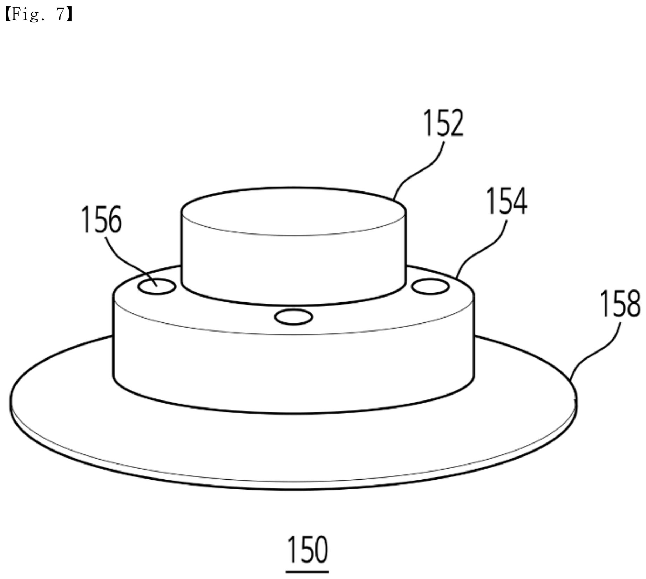

Fig. 7 is a perspective view of an insulating member according to various aspects of the present disclosure.

Referring to Fig. 7, the insulating member 150 may include a first protrusion 152, a second protrusion 154 surrounding the first protrusion 152, and a flat portion 158 surrounding the second protrusion 154. The first protrusion 152, the second protrusion 154, and the flat portion 158 have different heights and may include steps in the winding (Y axis) direction.

According to various aspects, the first protrusion 152, the second protrusion 154, and the flat surface 158 of the insulating member 150 may be flat surfaces that extend along lines or planes that are parallel to each other. Here, the first protrusion 152 and the second protrusion 154 may protrude in a direction relative to the flat portion 158. When the insulating member 150 is positioned above the electrode assembly, the first protrusion 152 and the second protrusion 154 may be interposed between the cap plate and the electrode assembly so as to face in a direction away from the electrode assembly. The insulating member 150 thereby insulates the cap plate from the electrode assembly.

The insulating member 150 may include a tab opening 156 for through which the first electrode tab may extend. In one example, the tab opening 156 is formed on the second protrusion 154. There may be a plurality of such tab openings spaced at regular intervals about the second protrusion. Specifically, the plurality of tab openings 156 may be arranged at regular intervals along the perimeter of the circle. In a specific embodiment there are four tab openings arranged at 90° intervals in a circle around the second protrusion 154. However, the arrangement and number of tab openings 156 are not limited to the depicted embodiment. That is, in other embodiments, the arrangements and numbers of tab openings 156 may be different.

The outer surface of the insulating member 150 may extend along a line that is perpendicular to the first protrusion 152, the second protrusion 154, and the flat portion 158. Here, the first protrusion 152, the second protrusion 154 and the flat surface 158 may be flat surfaces that extend along lines or planes that are parallel to each other. As such, the outer surface of the electrode assembly that is perpendicular to the top of the electrode assembly may be easily covered by the insulating member 150.

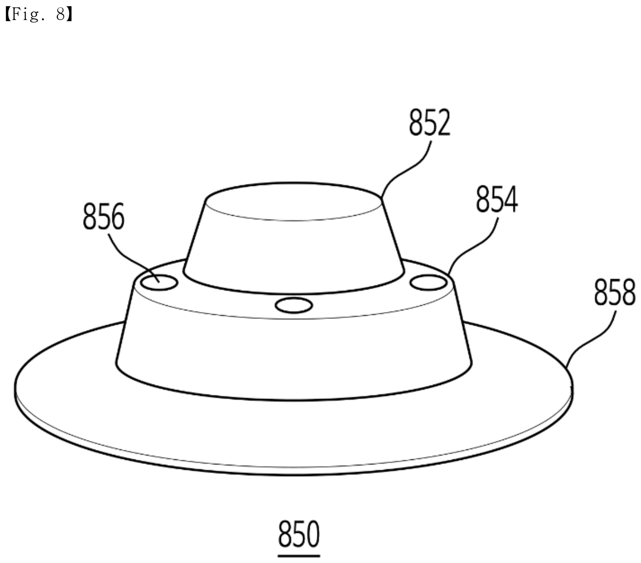

Fig. 8 is a perspective view of an insulating member according to various aspects of the present disclosure. Aspects of the insulating member shown in Fig. 8 that are different than the insulating member shown in Fig. 7 will be described.

Referring to Fig. 8, the insulating member 850 may include a first protrusion 852, a second protrusion 854 surrounding the first protrusion 852, and a flat portion 858 surrounding the second protrusion 854.

According to various aspects, the outer surface of the insulating member 850 may be inclined radially outwardly of the insulating member 850. Here, the first protrusion 852, the second protrusion 854 and the flat surface 858 may be flat surfaces that extend in lines that are parallel to each other. Because of this, the outer surface of the electrode assembly, which is inclined radially outwardly, may be easily covered using an insulating member 850.

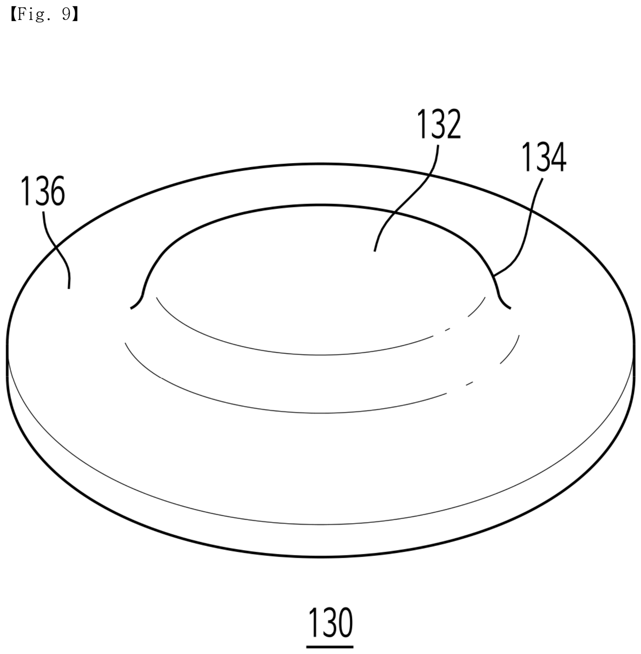

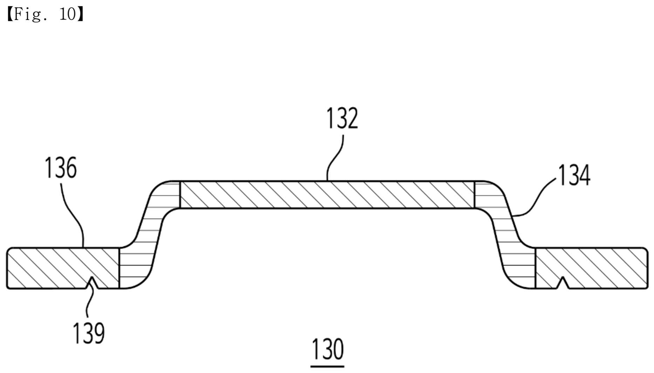

Fig. 9 is a perspective view showing an example of a cap plate according to various aspects of the present disclosure, and Fig. 10 is a cross-sectional view showing an example of a cap plate according to various aspects of the present disclosure.

Referring to Figs. 9 and 10, the cap plate 130 may include a first flat portion 132, a second flat portion 136, and a connection portion 134 positioned between the first flat portion and the second flat portion. The first flat portion 132 may be located at the center of the cap plate 130. The second flat portion 136 may be located outside the first flat portion 132. Specifically, the second flat portion 136 may be located at the outer end of the first flat portion 132. Here, the outer end means a position or region that is away from the center of the cylindrical case 120 in the radial direction when the cap plate 130 is assembled to the cylindrical case 120 (see Fig. 2).

According to various aspects, the first flat portion 132 may protrude relative to the second flat portion 136. In particular, when the cap plate 130 seals the cylindrical case 120 (see Fig. 2), the first flat portion 132 protrudes in a direction away from the electrode assembly 200 (see Fig. 2). Because of this, the first flat portion 132 may be connected to an external terminal such that current may pass through the first flat portion 132.

The connection portion 134 is positioned between the first flat portion 132 and the second flat portion 136 to connect the first flat portion 132 and the second flat portion 136. The connection portion 134 may be inclined radially from the first flat portion 132. And the inner end of the second flat portion 136 may be positioned radially outward from the outer end of the first flat portion 132.

The cap plate 130 may include a notch 139 formed in the lower surface of the second flat portion 136. The notch 139 may be formed to a certain depth in the lower surface of the second flat portion 136. The notch 139 may be formed continuously or discontinuously along the circumferential direction on the lower surface of the second flat portion 136. When the internal pressure of the secondary battery becomes greater than the operating pressure of the cap plate 130, the notch 139 is broken, allowing the internal gas of the cylindrical case 120 to be released to the outside. Thus, the secondary battery is safer. A secondary battery according to various aspects of the present disclosure has only a cap plate 130 provided as a component for sealing the upper portion of a cylindrical case 120, and other components having a current blocking function are not provided. Thus, additional space is provided for accommodating the larger electrode assembly 200 according to the present disclosure, thereby improving the energy density of the secondary battery.

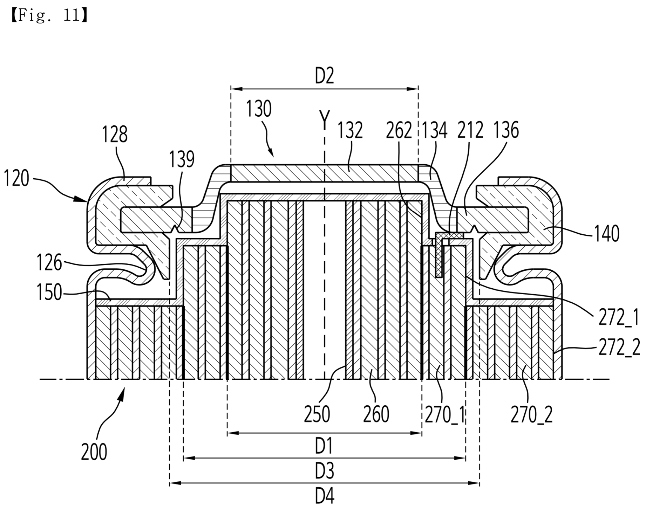

Fig. 11 is a cross-sectional view showing an example of the upper portion of a secondary battery according to various aspects of the present disclosure. Differences between the configuration shown in Fig. 11 and the configuration shown in Fig. 2 will be described.

Referring to Fig. 11, the cap plate 130 may include a first flat portion 132, a second flat portion 136, and a connection portion 134 positioned between the first flat portion and the second flat portion. A gasket 140 may be interposed between the cap plate 130 and the cylindrical case 120. Specifically, the second flat portion 136 may be fixed to the cylindrical case 120 via the gasket 140.

The gasket 140 may insulate between the cap plate 130 and the cylindrical case 120. In various aspects, the gasket 140 wraps around the outer edge of the second flat portion 136 of the cap plate 130. The outer surface of the gasket 140 may be in contact with a beading portion 126 and a crimping portion 128, and the inner surface of the gasket 140 may be in contact with the second flat portion 136. The height of the first flat portion 132 (in the Y direction) may be higher than or equal to the height of the crimping portion 128 at the top of the cylindrical case 120.

According to various aspects, the first electrode tab 212 may protrude from the first outer portion 270_1 and be connected to the second flat portion 136 of the cap plate 130. Although not shown, the second electrode tab 222 protrudes from the first outer portion 270_1 and may be connected to the bottom portion 122 of the cylindrical case 120 (see Fig. 2).

The top of the core portion 260, the top of the first outer portion 270_1, and the top of the second outer portion 270_2 extend along lines or planes that are parallel to each other. The first outer surface 262 may be perpendicular to the top of the core portion 260 and the top of the first outer portion 270_1, and the second outer surface 272_1 may be perpendicular to the top of the first outer portion 270_1 and the top of the second outer portion 270_2.

The top of the core portion 260 may be higher (in the Y direction shown in Fig. 11) than the bottom of the second flat portion 136 of the cap plate 130. Additionally, the top of the core portion 260 may be higher than the top of the second flat portion 136 of the cap plate 130. The longest diameter D1 of the core portion 260 may be greater than or equal to the diameter D2 of the first flat portion 132. In other embodiments, the longest diameter D1 of the core portion 260 may be less than the diameter D2 of the first flat portion 132.

The top of the first outer portion 270_1 may be higher in the Y direction than the bottom of the gasket 140. The longest diameter D3 of the first outer portion 270_1 may be less than the diameter D4 of the circle formed by the inner surface of the gasket 140. Because of this, the electrode assembly 200 may be positioned in open space inside the cylindrical case 120, thereby improving the energy density of the secondary battery.

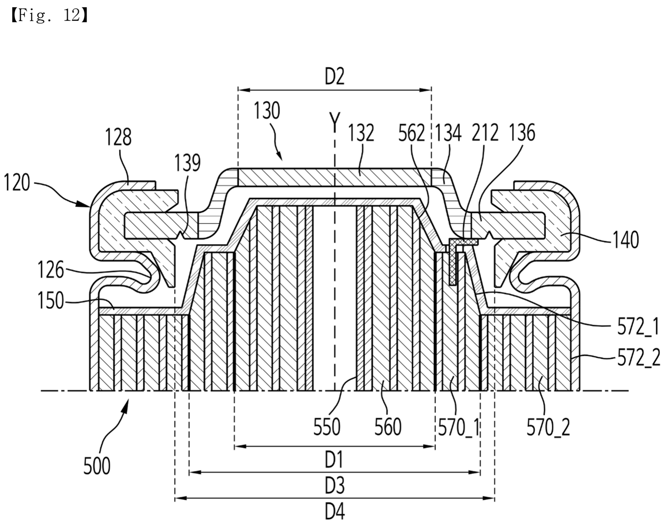

Fig. 12 is a cross-sectional view showing an example of the upper portion of a secondary battery according to various aspects of the present disclosure. Differences between the configuration shown in Fig. 12 and the configuration shown in Fig. 11 will be described.

Referring to Fig. 12, the top of the core portion 560, the top of the first outer portion 570_1, and the top of the second outer portion 570_2 may extend along lines or planes that are parallel to each other, and the first outer surface 562 and the second outer surface 572_1 may be inclined radially outward. Accordingly, the electrode assembly 500 may be shaped to correspond to shapes of the cap plate 130 and the gasket 140, thereby improving the energy density of the secondary battery.

An example in accordance with the aspects described herein may include a secondary battery having an electrode assembly, wherein the electrode assembly includes: a first electrode, a second electrode, and a separator interposed between the first electrode and the second electrode, wherein the first electrode, the separator, and the second electrode are wound around a winding axis (Y) to form a wound electrode assembly having a core portion and an outer portion surrounding to the core portion, wherein a length of the core portion in a direction of the winding axis (Y) is longer than a length of the outer portion in the direction of the winding axis (Y). Optionally, the electrode assembly may be accommodated in a cylindrical case, wherein the cylindrical case includes a cap plate and a gasket positioned between the cap plate and the cylindrical case for sealing an opening of the cylindrical case. The secondary battery may be further configured as described herein. The cap plate may include one or more portions (e.g., one or more notches) that allow for a rupture of the cap plate under pressure from the inside of the cylindrical case to provide an overpressure safety function.

An example in accordance with the aspects described herein may include an electrode assembly including: a first electrode, a second electrode, and a separator interposed between the first electrode and the second electrode, wherein the first electrode, the separator, and the second electrode are wound around a winding axis (Y) to form a wound electrode assembly having a core portion and an outer portion surrounding to the core portion, wherein a length of the core portion in a direction of the winding axis (Y) is longer than a length of the outer portion in the direction of the winding axis (Y). The electrode assembly may be further configured as described herein. The electrode assembly may be accommodated in a cylindrical case as part of a secondary battery, wherein the cylindrical case includes a cap plate and a gasket positioned between the cap plate and the cylindrical case for sealing an opening of the cylindrical case. The secondary battery may be further configured as described herein.

Although the present disclosure has been described above with respect to embodiments thereof, the present disclosure is not limited thereto. Various modifications and variations can be made thereto by those skilled in the art within the spirit of the present disclosure.

## Claims

1. A secondary battery (100) comprising:
an electrode assembly (200, 500);
a cylindrical case (120) accommodating the electrode assembly (200, 500);
a cap plate (130) sealing an opening of the cylindrical case (120); and
a gasket (140) positioned between the cap plate (130) and the cylindrical case (120),
wherein the electrode assembly (200, 500) comprises:
a first electrode (210, 510) connected to a first electrode tab (212, 512),
a second electrode (220, 520) connected to a second electrode tab (222, 522), and
a separator (230, 530) that is interposed between the first electrode (210, 510) and the second electrode (220, 520),
wherein the first electrode (210, 510), the separator (230, 530), and the second electrode (220, 520) are sequentially stacked and wound around a winding axis (Y) to form the electrode assembly (200, 500), with the electrode assembly (200, 500) including a core portion (260, 560) having a center hole (250, 550) formed therein and an outer portion (270, 570) connected to the core portion (260, 560), and
wherein a length of the core portion (260, 560) in a direction of the winding axis (Y) is longer than a length of the outer portion (270, 570) in the direction of the winding axis (Y).

2. The secondary battery (100) according to claim 1, wherein the cap plate (130) comprises:
a first flat portion (132) positioned at a center and protruding in a direction away from the electrode assembly (200, 500) accommodated in the case (120),
a second flat portion (136) located outside the first flat portion (132), and
a connection portion (134) positioned between the first flat portion (132) and the second flat portion (136).

3. The secondary battery (100) according to claim 2, wherein the connection portion (134) is inclined radially outward from the first flat portion (132).

4. The secondary battery (100) according to claim 2 or 3, wherein a notch (139) is formed in a lower surface of the second flat portion (136) of the cap plate (130).

5. The secondary battery (100) according to any one of claims 2 to 4, wherein the outer portion (270, 570) comprises:
a first outer portion (270_1, 570_1) connected to the core portion (260, 560), and
a second outer portion (270_2, 570_2) connected to the first outer portion (270_1, 570_1),
wherein a length of the first outer portion (270_1, 570_1) in the direction of the winding axis (Y) is shorter than the length of the core portion (260, 560) in the direction of the winding axis (Y), and
wherein a length of the second outer portion (270_2, 570_2) in the direction of the winding axis (Y) is shorter than the length of the first outer portion (270_1, 570_1) in the direction of the winding axis (Y).

6. The secondary battery (100) according to claim 5, wherein the first electrode tab (212, 512) and the second electrode tab (222, 522) protrude from the first outer portion (270_1, 570_1).

7. The secondary battery (100) according to any one of claims 2 to 6, wherein the first electrode tab (212, 512) is connected to the second flat portion (136) of the cap plate (130).

8. The secondary battery (100) according to any one of claims 1 to 7, wherein the second electrode tab (222, 522) is connected to a bottom portion (122) of the case (120).

9. The secondary battery (100) according to any one of claims 1 to 8, further comprising an insulating member (150, 850) interposed between the cap plate (130) and the electrode assembly (200, 500).

10. The secondary battery (100) according to claim 5 or 6, wherein the electrode assembly (200, 500) comprises:
a first outer surface (262, 562) formed by the core portion (260, 560),
a second outer surface (272_1, 572_1) formed by the first outer portion (270_1, 570_1), and
a third outer surface (272_2, 572_2) formed by the second outer portion (270_2, 570_2).

11. The secondary battery (100) according to claim 10, wherein a top of the core portion (260, 560), a top of the first outer portion (270_1, 570_1), and a top of the second outer portion (270_2, 570_2) extend along lines or planes that are parallel to each other,
wherein the first outer surface (262) is perpendicular to the top of the core portion (260) and the top of the first outer portion (270_1), and
wherein the second outer surface (272_1) is perpendicular to the top of the first outer portion (270_1) and the top of the second outer portion (270_2).

12. The secondary battery (100) according to claim 10, wherein a top of the core portion (560), a top of the first outer portion (570_1), and a top of the second outer portion (570_2) extend along lines or planes that are parallel to each other,
wherein the first outer surface (562) and the second outer surface (572_1) are inclined radially outward from the core portion (560) and the first outer portion (570_1), respectively.

13. The secondary battery (100) according to any one of claims 2 to 12, wherein a top of the core portion (260, 560) is higher than a bottom of the second flat portion (136) of the cap plate (130) in the direction of the winding axis (Y).

14. The secondary battery (100) according to any one of claims 5 to 13, wherein a top of the first outer portion (270_1, 570_1) is higher than a bottom of the gasket (140) in the direction of the winding axis (Y).

15. The secondary battery (100) according to any one of claims 5 to 14, wherein a longest diameter (D3) of the first outer portion (270_1, 570_1) is shorter than a diameter (D4) of a circle formed by an inner surface of the gasket (140).
